# FASCICULE DE BREVET EUROPEEN

(11) **EP 2 993 075 B1**
(45) Date de publication et mention de la délivrance du brevet: **02.10.2019**
(21) Numéro de dépôt: 15182266.5
(22) Date de dépôt: 25.08.2015
(51) Int. Cl.: B60M 1/36, B61L 3/00, B61L 3/18, B61L 23/14, B61L 27/00, G05B 15/02, G06F 1/26, B61C 3/00, B60L 9/00, B60M 1/30, B61L 25/02, B61L 27/04, B60L 50/90

(54) **PROCÉDÉ POUR COMMANDER UN VÉHICULE DE TRANSPORT TERRESTRE , VÉHICULE DE TRANSPORT TERRESTRE, ÉQUIPEMENT AU SOL, ET SYSTÈME DE TRANSPORT**
VERFAHREN ZUR STEUERUNG EINES LANDTRANSPORTFAHRZEUGS, LANDTRANSPORTFAHRZEUG, BODENAUSRÜSTUNG UND TRANSPORTSYSTEM
METHOD FOR CONTROLLING A LAND TRANSPORT VEHICLE, LAND TRANSPORT VEHICLE, GROUND EQUIPMENT AND TRANSPORT SYSTEM

(30) Priorité: 04.09.2014 FR 1458296
(43) Date de publication de la demande: 09.03.2016
(73) Titulaire: ALSTOM Transport Technologies, 93400 Saint-Ouen (FR)
(72) Inventeur: HOURTANE, Jean-Luc, 13320 BOUC BEL AIR (FR); GAUCHE, Denis, 06620 LE BAR SUR LOUP (FR); CHEVALLIER, David, 13290 LES MILLES (FR); CHAINTRON, Yann, 13127 VITROLLES (FR); RABEYRIN, Xavier, 13008 MARSEILLE (FR)
(74) Mandataire: Lavoix

(56) Documents cités:
- FR-A1- 2 918 004
- FR-A1- 2 924 990
- JP-A- 2004 136 860
- FICAT T ET AL: "APS: l'Alimentation Par le Sol, une solution rénovatrice pour les tramways", REVUE GÉNÉRALE DES CHEMINS DE FER : RCGF, HC ÉDITIONS, FR, vol. 182, 1 April 2009 (2009-04-01), pages 25-40, XP001525028, ISSN: 0035-3183

## Description

La présente invention concerne un procédé pour commander un véhicule de transport terrestre circulant sur une voie, la voie comprenant, suivant une direction de déplacement du véhicule de transport terrestre, une zone avec une alimentation externe adjacente à une zone sans alimentation externe à parcourir avec un dispositif d'alimentation embarqué, la zone avec une alimentation externe comprenant un dispositif d'alimentation externe par le sol munie d'une pluralité de segments d'alimentation disposés séquentiellement suivant la direction de la voie, le véhicule de transport terrestre comportant au moins un moyen de captation propre à être mis en contact avec un segment d'alimentation d'une part et à être connecté électriquement avec au moins un moteur de traction d'autre part, le véhicule de transport terrestre comportant en outre un dispositif d'alimentation embarqué propre à être connecté électriquement au ou à chaque moteur de traction. En outre, la présente invention concerne un véhicule de transport terrestre comprenant au moins un moteur de traction ; au moins un moyen de captation, propre à être mis en contact avec un segment d'alimentation d'un dispositif d'alimentation externe et propre à être connecté au ou à chaque moteur de traction ; une unité de communication propre à communiquer avec un équipement au sol associé au segment d'alimentation au voisinage duquel circule le véhicule de transport terrestre à l'instant courant ; un contrôleur embarqué connecté à l'unité de communication pour émettre et recevoir des signaux. De plus, l'invention concerne un équipement au sol pour un système de transport et un système de transport comprenant au moins un véhicule de transport terrestre tel que décrit ci-dessus et un équipement au sol tel que décrit ci-dessus.

On a proposé, dans le document FR 2 791 929, un dispositif de détection de présence pour un véhicule ferroviaire. Le véhicule ferroviaire comprend au moins un frotteur qui est mis en contact avec un segment d'alimentation agencé dans le sol. Chaque segment comprend une antenne propre à recevoir un signal de présence émis par le véhicule ferroviaire. Chaque segment est propre à émettre en réponse un signal de retour. Lorsque le véhicule ferroviaire ne reçoit pas de signal de retour, un commutateur placé entre le frotteur et le moteur du véhicule interrompt le contact électrique entre le frotteur et le moteur de manière immédiate. Cela génère une décélération brutale du véhicule ferroviaire.

FR 2 918 004 A1 divulgue un procédé pour commander un véhicule de transport terrestre alimenté par le sol.

Le document FICAT T ET AL: "APS: l'Alimentation Par le Sol, une solution rénovatrice pour les tramways", REVUE GÉNÉRALE DES CHEMINS DE FER : RCGF, HC ÉDITIONS, FR, vol. 182, 1 avril 2009, pages 25-40, ISSN: 0035-3183 divulgue le système d'alimentation par le sol pour un tramway.

Le but de la présente invention est de permettre au véhicule de transport terrestre alimenté en énergie électrique depuis le sol d'anticiper le type de captation du courant de traction et ainsi d'augmenter le confort des voyageurs à bord d'un tel véhicule de transport terrestre, en réduisant les changements brusques de vitesse du véhicule de transport terrestre.

Ce but est atteint selon l'invention grâce à un procédé selon la revendication 1.

Selon des caractéristiques avantageuses, le procédé peut comporter un ou plusieurs des caractéristiques suivantes :
- le signal de présence du véhicule de transport terrestre est envoyé vers l'antenne associée au segment d'alimentation, le signal de fin de zone avec une alimentation externe étant envoyé par la même antenne en réponse au signal de présence du véhicule de transport terrestre ;
- en réponse au signal de présence du véhicule de transport terrestre, le segment d'alimentation auquel l'antenne est associée, est mis sous tension ;
- la commande de la transition comprend une comparaison d'une vitesse actuelle avec une vitesse prédéterminée ; une diminution de la demande de puissance au dispositif d'alimentation externe; une augmentation de la demande de puissance au dispositif d'alimentation embarqué; un ajustement de la demande de puissance au dispositif d'alimentation externe à une puissance maximale générée par le dispositif d'alimentation embarquée; et/ou une commutation vers le dispositif d'alimentation embarqué.

En outre, la présente invention propose également Véhicule de transport terrestre
selon la revendication 6.

Selon des caractéristiques avantageuses, le véhicule de transport terrestre comprend un ou plusieurs des caractéristiques suivantes :
- le dispositif d'alimentation embarquée comporte au moins un accumulateur chimique, au moins une pile à combustible, et/ou au moins un supercondensateur ;
- l'unité de communication comprend une antenne embarquée agencée dans un ou chaque moyen de captation.

La présente invention propose également un équipement au sol équipement au sol pour un système de transport, l'équipement comprenant :
- une voie pour un véhicule de transport terrestre;
- un dispositif d'alimentation externe comportant une pluralité de segments d'alimentation agencés séquentiellement le long de la voie, la pluralité de segments d'alimentation formant une zone d'alimentation externe, au moins un segment d'extrémité étant situé au voisinage d'une fin de la zone d'alimentation externe jouxtant une zone sans alimentation externe, à parcourir avec un dispositif d'alimentation embarqué, une antenne de communication étant associée au ou à chaque segment d'alimentation externe; et
- un contrôleur propre à mettre sous tension le segment d'extrémité et propre à émettre, au moyen d'une antenne associée à ce segment d'extrémité, un signal de fin de zone avec une alimentation externe en réponse à un signal de présence d'un véhicule de transport terrestre reçu par ladite antenne.

Finalement, la présente invention propose un système de transport terrestre, guidé sur fer ou sur pneus, comprenant au moins un véhicule tel que décrit ci-dessus et un équipement au sol tel que décrit ci-dessus.

On entend par transport terrestre guidé sur fer, tout transport de type ferroviaire, de type urbain, par exemple tramway, de type suburbain, par exemple métro, de type banlieue, de type régional ou de type grandes vitesses, très grandes vitesses.

On entend par transport terrestre guidé sur pneus, tout transport terrestre utilisant des pneumatiques, par exemple de type métro pneumatique, tramway pneumatique, ou encore tout type de transport terrestre associé aux routes électriques de type bus électrique, camions électriques, ou voitures électriques.

La présente invention concerne généralement un procédé de gestion de l'alimentation d'un véhicule électrique de transport terrestre alimenté en énergie électrique depuis le sol circulant sur une voie, la voie comprenant, suivant une direction de déplacement du véhicule de transport terrestre, une zone avec une alimentation externe, équipé d'un dispositif d'alimentation externe par le sol, adjacente à une zone sans alimentation externe, à parcourir avec un dispositif d'alimentation embarqué à bord du véhicule, le procédé consistant à informer le véhicule qu'il approche de la fin de la zone avec une alimentation externe, le véhicule commandant, en fonction de cette information, de manière adaptée une transition de la demande de la puissance électrique du dispositif d'alimentation externe vers le dispositif d'alimentation embarqué.

D'autres caractéristiques, buts et avantages de l'invention apparaîtront à la lecture de la description détaillée qui va suivre, faite en référence aux figures annexées sur lesquelles :
- la figure 1 est un schéma de principe d'un véhicule de transport terrestre et d'un équipement au sol conforme à l'invention ; et,
- les figures 2 à 8 représentent schématiquement différentes étapes du fonctionnement du système de la figure 1.

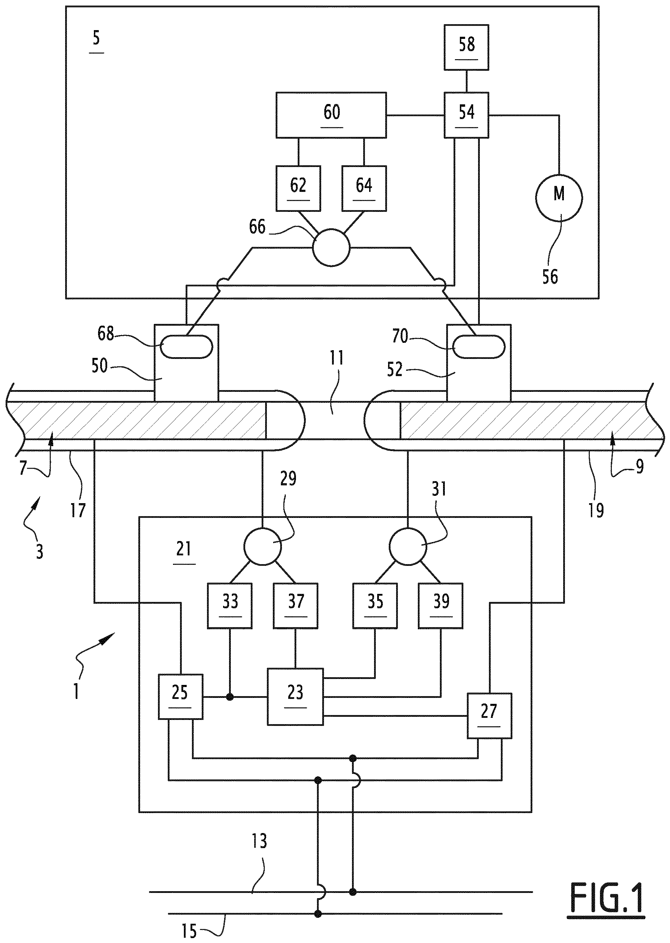

La figure 1 montre un schéma de principe simplifié d'un véhicule ferroviaire selon l'invention, notamment d'un tramway, et d'un équipement au sol selon l'invention. L'exemple suivant est décrit par rapport d'un véhicule ferroviaire. Mais, il est à noter que l'invention n'est pas limité à un véhicule ferroviaire et peut également concerner autres véhicules de transport terrestre alimenté en énergie électrique depuis le sol, par exemple un véhicule guidé sur le fer ou sur pneus.

La voie ferrée est subdivisée en zones avec une alimentation externe et en zones sans alimentation externe.

Une zone avec une alimentation externe comporte un équipement au sol 1 comprenant un dispositif d'alimentation externe 3, qui est disposé le long de la voie. Le dispositif d'alimentation externe 3 est fixe au sol. Ces zones correspondent par exemple à des lignes droites.

Une zone sans alimentation externe ne comporte pas un tel équipement au sol. Ces zones correspondant par exemple à des courbes, aiguillages, carrefours, zones de décélération ou descentes.

Dans le mode de réalisation préféré, le dispositif d'alimentation externe de l'équipement au sol 1 est du type dispositif d'alimentation par le sol.

Un tel dispositif est formé d'une série de segments d'alimentation oblongs, disposés parallèlement à la voie, de préférence entre les deux fils de rails constituant celle-ci. Deux segments d'alimentation consécutifs sont représentés sur la figure 1. Ils portent les références 7 et 9. Les segments d'alimentation sont constitués par des barres en un matériau conducteur du courant électrique.

Deux segments d'alimentation consécutifs sont séparés par un segment d'isolation 11, court, permettant d'isoler les deux segments d'alimentation l'un de l'autre.

Les segments 7, 9 et 11 sont agencés de manière à affleurer à la surface de la chaussée sur laquelle est implantée la voie d'alimentation.

Le long de cette série de segments d'alimentation, le dispositif d'alimentation externe 3 comporte une ligne d'alimentation 13, maintenue en permanence à un potentiel d'alimentation, ainsi qu'une ligne de masse 15, qui est au potentiel du rail de roulement, proche du potentiel de terre. Le retour de courant consommé par le véhicule est, par exemple, assuré par un rail de roulement de la voie.

L'équipement au sol 1 comprend par ailleurs plusieurs boucles conductrices formant des antennes.

Chaque antenne entoure un segment d'alimentation particulier auquel elle est associée. Par exemple sur la figure 1, le premier segment d'alimentation 7 est entouré par une première antenne 17 et le deuxième segment d'alimentation 9 est entouré par une deuxième antenne 19.

Dans un autre mode de réalisation, l'antenne s'étend parallèlement mais à côté du segment d'alimentation auquel elle est associée. Dans encore un autre mode de réalisation, une antenne est composée d'une pluralité de sous-antennes.

Une antenne 17, 19, possède, suivant la direction de la voie, sensiblement la même longueur que le segment d'alimentation auquel elle est associée. Par exemple, elle s'étend au-delà de l'extrémité du segment d'alimentation, jusqu'à la moitié, suivant la direction de la voie, du segment d'isolation adjacent à cette extrémité.

En outre, l'équipement au sol 1 comprend un dispositif de contrôle 21, qui est connecté à la ligne d'alimentation 13 et à la ligne de masse 15.

Dans l'exemple illustré sur la figure 1, le dispositif de contrôle 21 est propre à contrôler deux segments d'alimentation voisins, tels que les segments d'alimentation 7 et 9.

Dans d'autres modes de réalisation, un dispositif de contrôle est propre à contrôler soit un unique segment d'alimentation, soit plus de deux segments d'alimentation.

Le dispositif de contrôle 21 est muni d'un contrôleur 23 propre à piloter un commutateur 25, respectivement 27, associé au segment d'alimentation 7, respectivement 9.

Dans un autre mode de réalisation, le dispositif de contrôle est muni de contrôleurs séparés dédiés à chaque segment d'alimentation.

Chaque commutateur 25, 27, est agencé en série entre la ligne d'alimentation 13 ou la ligne de masse 15, d'une part, et le segment d'alimentation 7, 9, correspondant d'autre part. Un commutateur 25, 27, permet de connecter sélectivement le segment d'alimentation 7, 9, correspondant soit à la ligne d'alimentation 13, pour le porter au potentiel d'alimentation, soit à la ligne de masse, pour le porter au potentiel de terre.

Le contrôleur 23 est propre à mettre sous tension un segment d'alimentation 7, respectivement 9, seulement lorsqu'un véhicule de transport terrestre 5 se trouve au-dessus de ce segment d'alimentation.

A cet effet, le dispositif de contrôle 21 comprend, pour chaque antenne 17, 19, un coupleur 29, respectivement 31.

Chaque coupleur 29, 31, est connecté à un récepteur 33, 35, et à un émetteur 37, 39.

Les récepteurs 33, 35, et les émetteurs 37, 39, sont connectés au contrôleur 23.

Dans un mode de réalisation alternatif, les récepteurs et les émetteurs sont intégrés dans un seul dispositif.

Les émetteurs 37, 39, et les récepteurs sont typiquement intégrés dans chaque dispositif de contrôle 21, par exemple dans un coffret d'alimentation installé au sol.

Dans le mode de réalisation actuellement préféré, la fréquence de fonctionnement d'un récepteur 33, 35, est différente de la fréquence de fonctionnement de l'émetteur 37, 39, correspondant. Par exemple, les récepteurs 33, 35, sont propres à recevoir un signal radiofréquence modulé sur une porteuse entre 400 et 500 kHz, par exemple 483 kHz ou 450 kHz, et les émetteurs 37, 39, sont propres à émettre un signal radiofréquence modulé sur une porteuse entre 30 et 50 kHz, par exemple 38 kHz.

Le contrôleur 23 est propre à recevoir, via un récepteur 33, 35, un signal de présence émis par un véhicule 5, capté par l'antenne 17, 19, indiquant la présence du véhicule 5 au-dessus du segment d'alimentation 7, 9, correspondant.

Le contrôleur 23 est propre à envoyer un signal montant, en particulier lors de détection de présence du véhicule sur un segment respective, via l'émetteur 37, respectivement 39, et l'antenne 17, respectivement 19, à destination du véhicule de transport terrestre 5 présent au-dessus du segment d'alimentation 7, respectivement 9. Par exemple, dans un mode de réalisation, le signal montant est transmis dans un flux montant vers le véhicule de transport terrestre pendant la présence du véhicule, en particulier sur un segment respectif.

En outre, en réponse à la réception d'un signal de présence, le contrôleur 23 est propre à mettre le segment d'alimentation 7, 9, correspondant sous tension, en modifiant l'état du commutateur 25, 27, pour connecter la ligne d'alimentation 13 audit segment d'alimentation 7, 9, correspondant.

Lorsqu'aucun signal de présence n'est reçu, le contrôleur 23 est propre à connecter ou à laisser connecté le segment d'alimentation 7, 9, à la ligne de masse 15. A cet effet, l'interrupteur 25, 27, est mis dans l'état conducteur entre le segment d'alimentation 7, 9, et la ligne de masse 15.

Pour capter le courant électrique générer par le dispositif d'alimentation par le sol 3, le véhicule 5 comporte au moins un moyen de captation, par exemple un frotteur, propre à être mis en contact avec le segment au-dessus duquel se trouve le véhicule. Le véhicule 5 de la figure 1 comporte deux tels moyens de captation, dont un moyen de captation arrière 50 et un moyen de captation avant 52, qui sont propres à être mis en contact avec un segment d'alimentation 7, 9. Dans un mode de réalisation, les moyens de captation 50, 52 peuvent être escamotés ou levés.

En outre, le véhicule de transport terrestre 5 est muni d'un dispositif d'alimentation embarqué 58, par exemple une batterie, un super condensateur, une pile à combustible ou d'autres types de dispositif d'alimentation embarqué.

De préférence, un dispositif d'alimentation embarqué 58 sans émission à gaz à effet de serre est utilisé.

Le véhicule de transport terrestre est ainsi rendu autonome, et peut parcourir des zones sans alimentation externe.

Un commutateur 54 permet de connecter les moyens de captation et le dispositif d'alimentation embarqué, d'une part, à un ou chaque moteur de traction 56 du véhicule 5, d'autre part.

Un contrôleur embarqué 60 est connecté au commutateur 54 pour contrôler simultanément la puissance fournie au ou à chaque moteur de traction 56 en provenance des moyens de captation 50, 52 et la puissance fournie au ou à chaque moteur de traction 56 par le dispositif d'alimentation embarqué 58.

En outre, le véhicule de transport terrestre 5 est pourvu d'un émetteur embarqué 62 et d'un récepteur embarqué 64. L'émetteur embarqué 62 et le récepteur embarqué 64 peuvent être réalisés dans un seul dispositif. L'émetteur embarqué 62 et le récepteur embarqué 64 sont connectés via un coupleur embarqué 66 à des antennes embarquées 68, 70 agencées respectivement dans chaque moyen de captation 50, 52.

Une antenne embarquée 68, 70 est agencée de telle manière qu'un signal radiofréquence est transmis vers l'antenne au sol 17, 19, associée au segment d'alimentation 7, 9 avec lequel le moyen de captation 50, 52, est en contact ou au-dessus duquel se trouve le moyen de captation 50, 52, à l'instant courant.

L'antenne embarquée 68, 70 est propre à recevoir des signaux radiofréquence en provenance de l'antenne au sol 17, 19, associée au segment d'alimentation 7, 9 avec lequel le moyen de captation 50, 52, est en contact ou au-dessus duquel se trouve le moyen de captation 50, 52.

L'émetteur embarqué 62, le récepteur embarqué 64, le coupleur embarqué 66 et les antennes embarquées 68, 70 forment ensemble une unité de communication.

Dans un mode de réalisation, l'émetteur embarqué 62 est propre à émettre un signal ayant une porteuse entre 400 kHz et 500 kHz, par exemple 450 kHz ou 483 kHz, pour transmettre un signal de présence. Le récepteur embarqué 64 est propre à recevoir un signal ayant une porteuse entre 30 et 50 kHz, par exemple 38 kHz.

Dans une zone avec une alimentation externe, au moins un moyen de captation 48, 50, du véhicule de transport terrestre 5 est en contact avec un segment d'alimentation, pour capter une puissance générée par le dispositif d'alimentation externe, et l'appliquer au ou à chaque moteur de traction du véhicule.

En revanche, dans une zone sans alimentation externe, aucun moyen de captation du véhicule de transport terrestre 5 n'est en contact avec un segment d'alimentation 7, 9, car de tels segments n'existent pas dans une telle zone. Le véhicule de transport terrestre 5 est forcé de fournir à ses moteurs de traction une puissance électrique provenant de ses propres réserves d'énergie pour parcourir une zone sans alimentation externe. Pour être autonome sur une telle zone de la voie, le véhicule comporte donc un dispositif d'alimentation embarqué. Ainsi, la zone sans alimentation externe correspond à une zone à parcourir en utilisant le dispositif d'alimentation embarqué.

Par conséquent, quand le véhicule de transport terrestre 5 franchit la frontière entre une zone avec une alimentation externe et une zone sans alimentation externe, le véhicule de transport terrestre 5 est forcé de commuter la source d'alimentation électrique de ses moteurs, pour passer du dispositif d'alimentation externe au dispositif d'alimentation embarqué.

Pour réaliser efficacement cette commutation, le véhicule 5 doit donc pouvoir anticiper le franchissement d'une frontière entre une zone avec une alimentation externe et une zone sans alimentation externe.

A cet effet, le contrôleur 23 d'au moins un segment d'alimentation, qui est situé à l'extrémité de la zone avec un dispositif d'alimentation externe à proximité de la frontière entre la zone avec et la zone sans dispositif d'alimentation externe, est propre à intégrer, dans le signal montant, un signal de fin de zone avec une alimentation externe. Par exemple, les contrôleurs 23 associés aux deux derniers segments d'alimentation 7, 9, situés à l'extrémité d'une zone avec une alimentation externe sont propres à émettre un signal de fin de zone avec une alimentation externe.

Dans un mode de réalisation, les deux signaux de fin de zone avec une alimentation externe associés aux deux derniers segments de la zone avec une alimentation externe identifiant différent, par exemple un ou plusieurs bits d'indentifications différents. Par exemple, un premier signal de fin de zone d'alimentation externe est envoyé par l'émetteur 39 associé au dernier segment d'alimentation 9 et un deuxième signal de fin de zone avec une alimentation externe est envoyé par l'émetteur 37 associé à l'avant-dernier segment d'alimentation 7.

Dans un autre mode de réalisation, seul le signal montant associé au dernier segment d'alimentation avant la fin de la zone avec une alimentation externe comporte un signal de fin de zone avec une alimentation externe. Dans un autre mode de réalisation, le signal montant associé aux trois ou plus de trois derniers segments d'alimentation situés avant la fin de la zone avec une alimentation externe comportent un signal de fin de zone avec une alimentation externe.

Il est à noter que le terme « dernier » est utilisé en considérant la direction de déplacement du véhicule de transport terrestre sur la voie, de la zone avec une alimentation externe vers la zone sans alimentation externe.

Dans le mode de réalisation préférentiel, le signal montant comportant le signal de fin de zone avec une alimentation externe est défini avec identifiant étant de préférence un numéro binaire quatre bits. Cela permet de générer jusqu'à seize identifiant différents, un identifiant permettant de coder une information de localisation telle que la proximité de la zone sans alimentation externe ou la longueur d'un segment et/ou la longueur de la zone sans alimentation externe dans laquelle le véhicule va entrer. Ces identifiants vont permettre au véhicule 5 de commander de manière adaptée le basculement d'une source de puissance à l'autre. Par exemple les les identifiant permettent de définir : une information de localisation par rapport à la fin de la zone d'alimentation, par exemple si c'est le dernier ou avant dernier segment avant la fin de la zone d'alimentation ; et une information, par exemple binaire, permettant d'identifier la longueur de la zone sans alimentation, permettant par exemple au véhicule d'adapter les délestages d'alimentation des auxiliaires.

Ainsi, un signal de fin de zone avec une alimentation externe est émis en direction d'un véhicule de transport terrestre uniquement au niveau de certains segments d'alimentation. Cela donne au véhicule de transport terrestre une information de localisation, lui permettant d'anticiper le passage d'une zone avec vers une zone sans alimentation externe.

Lorsque le récepteur embarqué 64 reçoit un signal de fin de zone avec une alimentation externe, le contrôleur embarqué 60 est propre à localiser le véhicule de transport terrestre 5 par rapport à la frontière et à commander le commutateur 54 pour passer du dispositif d'alimentation externe vers le dispositif d'alimentation embarquée 58 de véhicule de transport terrestre 5.

Le contrôleur embarqué 60 est propre à calculer un positionnement du véhicule de transport terrestre 5 sur la voie à partir des informations de localisation reçues par le récepteur embarqué 64. Par exemple, la longueur des segments d'alimentation 7, 9 étant connue le fait de recevoir un premier signal puis un second signal permet, en connaissant la vitesse courante du véhicule de déterminer l'instant à venir de franchissement de la frontière.

A partir de cette information de localisation, quand le véhicule de transport terrestre 5 s'approche de la fin de la zone avec une alimentation externe sur laquelle il se trouve, le contrôleur embarqué 60 est propre, dans une phase de transition, à réduire de manière contrôlée et progressive la demande de puissance électrique en provenance des moyens de captation 50, 52.

Par exemple, le contrôleur embarqué 60 est propre à réduire la demande d'une puissance en provenance de l'équipement au sol 1 via les moyens de captation 50, 52, lorsque cette puissance est supérieure à la puissance maximale que peut fournir le dispositif d'alimentation embarquée 58. La réduction de la puissance fournie aux moteurs de traction conduit à une réduction de l'effort de traction du véhicule.

Puis, une fois que la puissance en provenance de l'équipement au sol 1 est inférieure à la puissance maximale que peut fournir le dispositif d'alimentation embarquée 58, il est possible de basculer l'alimentation des moteurs de traction vers cette seconde source de puissance sans modifier l'effort de traction du véhicule et donc sans variation brutale de l'accélération.

Ainsi, le contrôleur embarqué 60 est propre, dans la phase de transition, à augmenter la demande de puissance en provenance du dispositif d'alimentation embarquée 58 pour alimenter le moteur de traction 56 tout en réduisant d'autant la demande de puissance en provenance du dispositif d'alimentation externe.

De plus, le contrôleur embarqué est propre à réduire la demande de puissance en provenance du dispositif d'alimentation externe, de manière à ce qu'elle soit sensiblement égale à zéro, lorsque le moyen de captation arrière 50 quitte le dernier segment d'alimentation externe 9.

Ainsi, par une commutation adaptée entres les sources de puissance électrique externe et embarquée du véhicule de transport terrestre 5 au cours de son exploitation, la traction du véhicule de transport terrestre 5 est régulée pour éviter toute variation brutale de l'accélération. La faible variation de l'accélération dans le temps, aussi appelé « Jerk » préserve le confort des voyageurs.

Avantageusement, la formation d'un arc électrique entre le véhicule 5 et l'équipement au sol 1 est évitée.

En outre, dans un mode de réalisation, le contrôleur embarqué 60 est propre à relever le ou les moyens de captation dans la zone sans alimentation externe.

Egalement, l'information sur la longueur de la zone sans alimentation externe et une localisation, par le contrôleur embarqué 60, en fonction de la vitesse ou une distance parcourue du véhicule permet ensuite de redescendre le ou les moyens de captation lorsque le véhicule de transport terrestre 5 atteint la zone suivante avec une alimentation externe, après avoir franchi la zone sans alimentation externe.

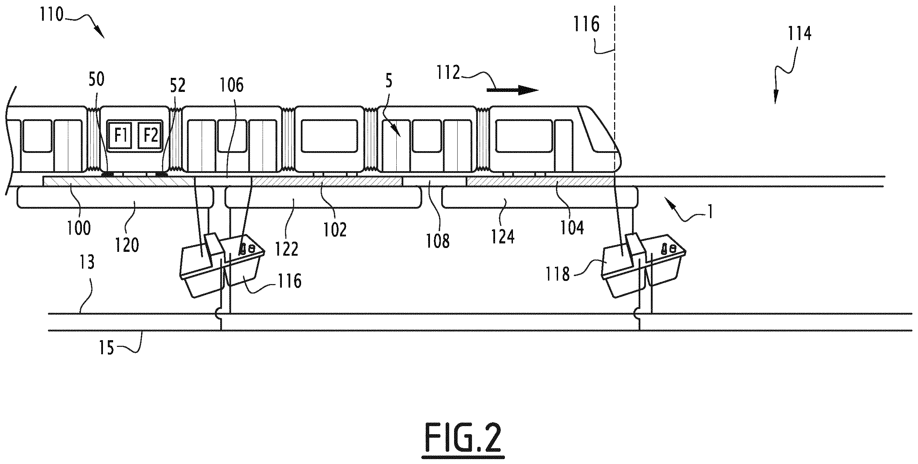

Dans la suite, le fonctionnement de l'invention sera détaillé à l'aide des figures 2 à 8.

Le véhicule de transport terrestre correspond au véhicule de transport terrestre 5 de la figure 1. Donc, les signes de références utilisés pour le véhicule de transport terrestre 5 ont été repris sur les figures 2 à 8.

Les figures 2 à 8 montrent un équipement au sol 1 comprenant trois segments d'alimentation 100, 102, 104 externes successifs suivant la direction de la voie. Les segments d'alimentation sont séparés par un segment d'isolation 106, entre le premier segment avec une alimentation 100 et le deuxième segment d'alimentation 102, et un deuxième segment d'isolation 108, entre le deuxième segment d'alimentation 102 et le troisième segment d'alimentation 104. Les segments d'alimentation successifs forment ainsi une zone d'alimentation externe 110 pour le véhicule de transport terrestre 5.

Suivant la direction de déplacement du véhicule de transport terrestre, les segments d'isolation ont une longueur, inférieure à la distance entre le moyen de captation arrière 50 et le moyen de captation avant 52. De cette manière, une alimentation externe continue est assurée dans la zone avec une alimentation externe 110.

Le véhicule 5 est en mouvement suivant le sens de la flèche 112 vers une zone sans alimentation externe 114.

La frontière 116 se trouve entre les deux zones 110, 114, au voisinage de l'extrémité du troisième segment d'alimentation 104.

Le premier segment d'alimentation 100 et le deuxième segment d'alimentation 102 sont connectés à un premier dispositif de contrôle 116. Le troisième segment d'alimentation est connecté à un deuxième dispositif de contrôle 118. Les deux dispositifs de contrôle 116, 118 sont respectivement connectés à la ligne d'alimentation 13 et à la ligne de masse 15. Une première antenne 120 est associée au premier segment d'alimentation 100, une deuxième antenne 122 est associée au deuxième segment d'alimentation 102, et une troisième antenne 124 est associée au troisième segment d'alimentation. Les antennes 120, 122, 124 sont, comme les segments d'alimentation 100, 102, 104, intégrées au sol autour du segment d'alimentation 100, 102, 104 respectif. La première antenne 120 et la deuxième antenne 122 sont connectées au premier dispositif de contrôle 116 et la troisième antenne 124 est connectée au deuxième dispositif de contrôle 118. La deuxième antenne 122 est propre à émettre un premier signal de fin de zone avec une alimentation externe et la troisième antenne 124 est propre à émettre un deuxième signal de fin de zone avec une alimentation externe. Le premier signal est différent du deuxième signal. Dans un mode de réalisation, la deuxième antenne 122 et/ou la troisième antenne 124 émettent en continu le signal de fin de zone d'alimentation externe.

Sur la figure 2, le véhicule de transport terrestre 5 émet un signal de présence, à partir des antennes embarquées 68, 70 vers la première antenne au sol 120 associée au premier segment d'alimentation 100, avec lequel sont en contact les deux moyens de captation 50, 52. En conséquence, le dispositif de contrôle 116 émet, via l'antenne 120, un signal montant et met le premier segment d'alimentation 100 sous tension en le connectant à la ligne d'alimentation 13. Par contre, le deuxième segment d'alimentation 102 et le troisième segment d'alimentation 104 sont connectés à la ligne de masse 15.

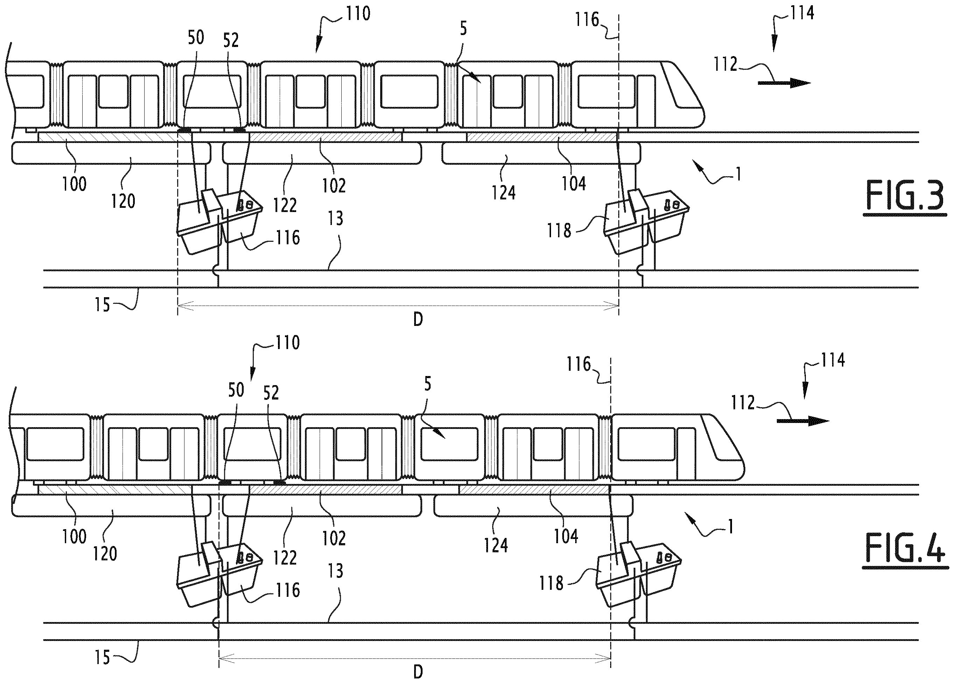

Sur la figure 3, le véhicule de transport terrestre 5 s'est déplacé suivant le sens de déplacement 112. Maintenant, seul le moyen de captation arrière 50 est en contact avec le premier segment d'alimentation 100. L'antenne 70 du moyen de captation avant 52 reçoit alors le premier signal de fin de zone avec une alimentation externe, émis par la deuxième antenne 122.

La phase de transition débute afin de basculer l'alimentation des moteurs de traction du dispositif l'alimentation externe vers le dispositif l'alimentation embarqué.

Le contrôleur embarqué 60 compare la vitesse actuelle avec une vitesse prédéterminée. Si la vitesse actuelle est supérieure à une vitesse prédéterminée, le contrôleur embarqué 60 commande le dispositif d'alimentation embarquée 58pour réduire progressivement la puissance fournie au moteur de traction 56. Si la vitesse est en dessous de la vitesse prédéterminée, le contrôleur embarqué 60 attend le code suivant pour réduire l'effort de traction fournie au moteur de traction 56.

Sur la figure 4, les deux moyens de captation 50, 52 ont quitté le premier segment d'alimentation 100 et le moyen de captation avant 52 est en contact avec le deuxième segment d'alimentation 102. En conséquence, le dispositif de contrôle 116 ne reçoit plus un signal de présence par l'antenne 120, et le premier segment d'alimentation 100 est déconnecté de la ligne d'alimentation 13 et est connecté à la ligne de masse 15. Le deuxième segment d'alimentation 102 est connecté à la ligne d'alimentation 13. A ce stade, les deux antennes embarquées 68, 70 reçoivent le premier signal de fin de zone avec une alimentation externe. Le contrôleur embarqué 60 détecte la vitesse actuelle. Si la vitesse est au-dessus de la vitesse prédéterminée, une réduction de la puissance fournie au moteur de traction est à nouveau commandée.

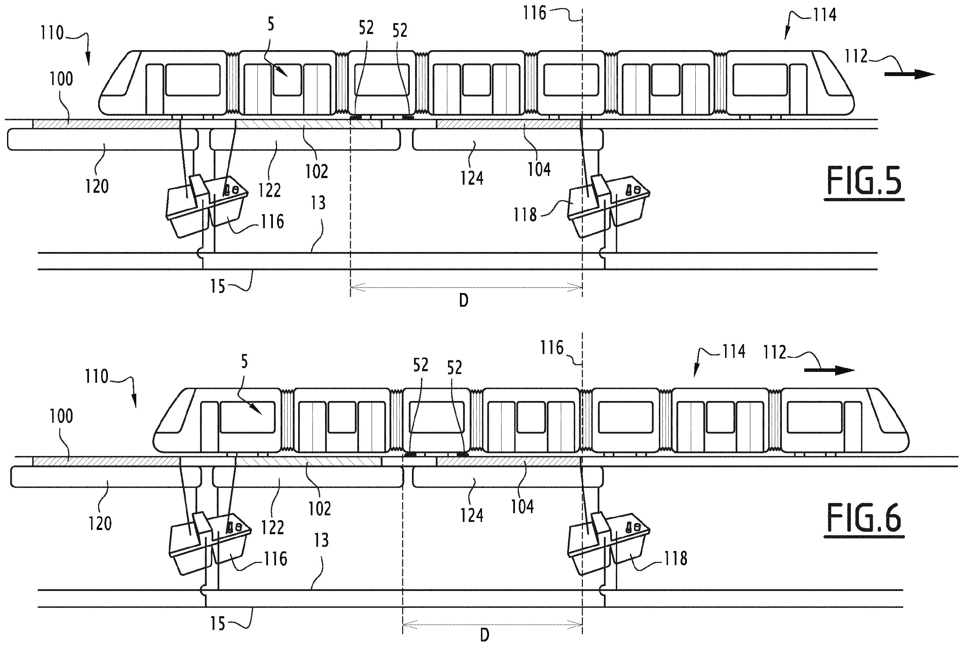

Sur la figure 5, l'antenne 70 agencée dans le moyen de captation avant 52 reçoit le deuxième signal de fin de zone avec une alimentation externe émis par la troisième antenne 124 qui est associée au troisième segment d'alimentation 104. Le contrôleur embarqué 60 en déduit la distance D entre le moyen de captation arrière 50 et la frontière 116. Si la vitesse est toujours supérieure à la vitesse prédéterminée, le contrôleur embarqué initie le basculement des sources d'alimentation.

Sur la figure 6, le véhicule de transport terrestre 5 est positionné de telle manière que les antennes des deux moyens de captation 50, 52 reçoivent le signal émis par la troisième antenne 124, associée au troisième segment d'alimentation 104. Le contrôleur embarqué reçoit, par les deux antennes embarquées 68, le deuxième signal de fin de zone avec une alimentation externe. Le contrôleur embarqué en déduit la distance D entre le moyen de captation arrière 50 et la frontière 116. Le contrôleur embarqué 60 commande la transition complète vers le dispositif d'alimentation embarqué 58. Pour ce faire, il commande l'augmentation de la puissance délivrée par le dispositif d'alimentation embarquée 58 au moteur de traction 56, jusqu'à la commutation complète vers le dispositif d'alimentation embarquée 58, la puissance provenant du dispositif externe étant alors nulle. En outre, le premier dispositif de contrôle 116 connecte le deuxième segment d'alimentation à la ligne de masse 15, et le deuxième dispositif de contrôle connecte le troisième segment d'alimentation 104 à la ligne d'alimentation 13.

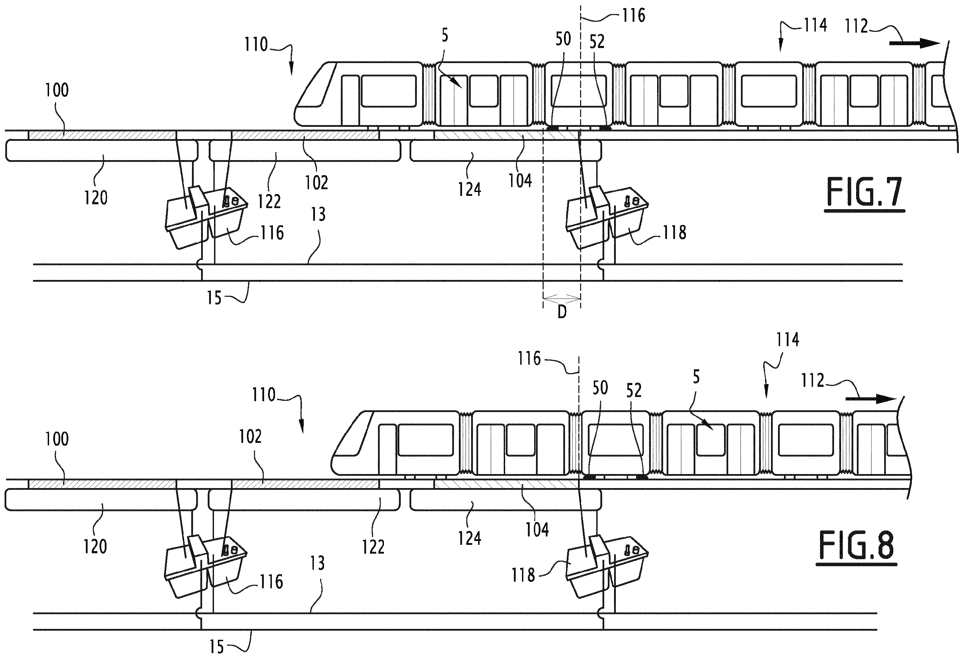

Sur la figure 7, le moyen de captation avant 52 a déjà dépassé la frontière 116 et plus aucun signal de fin de zone avec une alimentation n'est reçu par l'antenne embarquée 70. Donc, le deuxième signal de fin de zone avec une alimentation externe est seulement reçu par l'antenne 68 intégrée dans le moyen de captation arrière 50. Le contrôleur embarqué 60 en déduit la distance D entre le moyen de captation arrière 50 et la frontière 116. Si le contrôleur embarqué 60 n'a pas encore commandé le basculement du dispositif d'alimentation externe vers le dispositif d'alimentation embarqué 58, le contrôleur embarqué 60 commande le dispositif d'alimentation embarquée 58 pour ce faire.

Sur la figure 8, le moyen de captation arrière 50 perd le contact avec le troisième segment d'alimentation 104. Néanmoins, l'antenne 68 reçoit encore le deuxième signal de fin de zone avec une alimentation externe. Le contrôleur embarqué 60 peut maintenant commander le relèvement des moyens de captation 50, 52. Le véhicule de transport terrestre 5 roule maintenant en utilisant le dispositif d'alimentation embarqué 58 pour alimenter le moteur de traction 56. La phase de transition est alors finie.

Dans la phase de transition, la puissance demandée par le moteur de traction 56 est ajustée à la puissance maximale que peut délivrer le dispositif d'alimentation embarqué. Puis, une commutation entre les deux dispositifs l'alimentation est effectuée.

Avantageusement, la demande d'une puissance fournie par le dispositif d'alimentation externe est réduite sensiblement à zéro avant que le moyen de captation arrière ne quitte le dernier segment d'alimentation de la zone d'alimentation externe.

Ainsi, l'invention permet l'anticipation des zones d'autonomie et permet de piloter de manière optimisée un dispositif d'alimentation embarqué, par exemple un coffre de supercapacités, à bord du véhicule de transport terrestre, en assurant le confort des voyageurs pendant les phases de transition entre sources d'alimentation.

De plus, la formation d'un arc électrique entre le véhicule de transport terrestre et l'extrémité du segment au voisinage de la fin de la zone d'alimentation externe est évitée, un tel arc pouvant dégrader l'infrastructure au sol. En effet, l'invention permet d'éviter qu'au moment où le moyen de captation arrière quitte le dernier segment le circuit de puissance soit ouvert alors qu'il se trouve en pleine charge, ce qui provoquerait la formation d'un arc. L'anticipation de la fin de la zone d'alimentation externe permet d'annuler le courant demandé par les moyens de captation avant la fin de la zone d'alimentation externe.

Typiquement, le signal de la fin d'une zone d'alimentation externe est émis uniquement au niveau des segments d'alimentation d'extrémité ou de fin de la zone d'alimentation externe.

De manière similaire, les premiers segments d'une zone avec une alimentation externe indiquent au véhicule qu'il vient de franchir une frontière entre une zone sans alimentation externe et une zone avec une alimentation externe. En conséquence de la réception d'un tel signal montant, le véhicule commande une phase de transition permettant de basculer de manière continue d'une demande de puissance au dispositif d'alimentation embarqué à une demande de puissance au dispositif d'alimentation externe afin d'alimenter les moteurs de traction du véhicule.

## Revendications

1. Procédé pour commander un véhicule de transport terrestre (5) circulant sur une voie, la voie comprenant, suivant une direction de déplacement du véhicule de transport terrestre, une zone avec une alimentation externe (110) adjacente à une zone sans alimentation externe (114) à parcourir avec un dispositif d'alimentation embarqué, la zone avec une alimentation externe (110) comprenant un dispositif d'alimentation externe par le sol (3) munie d'une pluralité de segments d'alimentation (7, 9 ; 100, 102, 104) disposés séquentiellement suivant la direction de la voie, le véhicule de transport terrestre comportant au moins un moyen de captation (50, 52) propre à être mis en contact avec un segment d'alimentation d'une part et à être connecté électriquement avec au moins un moteur de traction (56) d'autre part, le véhicule de transport terrestre comportant en outre un dispositif d'alimentation embarqué (58) propre à être connecté électriquement au ou à chaque moteur de traction, le procédé comprenant au moins les étapes consistant à :
a) alimenter le ou chaque moteur de traction par une puissance fournie par un segment d'alimentation (7, 9 ; 100, 102, 104), avec lequel le moyen de captation (50, 52) est en contact ;
b) émettre, par le véhicule de transport terrestre (5), un signal de présence du véhicule de transport terrestre (5) ;
c) émettre, en réponse au signal de présence du véhicule de transport terrestre, par une antenne (17, 19 ; 120, 122, 124) associée à un segment d'alimentation situé à proximité de la fin de la zone avec une alimentation externe, un signal de fin de zone avec une alimentation externe ;
d) recevoir, par le véhicule de transport terrestre (5) positionné au voisinage du segment d'alimentation associé à l'antenne émettant ledit signal de fin de zone avec une alimentation externe, le signal de fin de la zone avec une alimentation externe ;
e) commander, après réception du signal de fin de zone avec une alimentation externe, une transition d'une demande de puissance au dispositif d'alimentation externe (3) vers une demande de puissance au dispositif d'alimentation embarqué (58) pour alimenter le ou chaque moteur de traction (56).

2. Procédé selon la revendication 1, comprenant, le signal de présence du véhicule de transport terrestre étant envoyé vers l'antenne (17, 19 ; 120, 122, 124) associée au segment d'alimentation, le signal de fin de zone avec une alimentation externe étant envoyé par la même antenne en réponse au signal de présence du véhicule de transport terrestre (5).

3. Procédé selon la revendication 2, **caractérisé en ce que**, en réponse au signal de présence du véhicule de transport terrestre (5), le segment d'alimentation (7, 9 ; 100, 102, 104) auquel l'antenne (17, 19 ; 120, 122, 124) est associée, est mis sous tension.

4. Procédé selon l'une quelconque des revendications précédentes, **caractérisé en ce que** la commande de la transition comprend une comparaison d'une vitesse actuelle avec une vitesse prédéterminée ; une diminution de la demande de puissance au dispositif d'alimentation externe (3) ; une augmentation de la demande de puissance au dispositif d'alimentation embarqué (58) ; un ajustement de la demande de puissance au dispositif d'alimentation externe à une puissance maximale générée par le dispositif d'alimentation embarquée (58) ; et/ou une commutation vers le dispositif d'alimentation embarqué (58).

5. Procédé selon l'une quelconque des revendications précédentes, **caractérisé en ce que** le signal de fin de la zone avec une alimentation externe comprend un identifiant permettant de définir une information de localisation par rapport à la fin de la zone d'alimentation externe et/ou une information permettant d'identifier la longueur de la zone sans alimentation externe.

6. Véhicule de transport terrestre (5) comprenant :
- au moins un moteur de traction (56) ;
- au moins un moyen de captation (50, 52), propre à être mis en contact avec un segment d'alimentation (7, 9 ; 100, 102, 104) d'un dispositif d'alimentation externe (3) et propre à être connecté au ou à chaque moteur de traction (56) ;
- un contrôleur embarqué (60) ;
- un dispositif d'alimentation embarqué (58) propre à être connecté au ou à chaque moteur de traction (56), le contrôleur embarqué (60) étant propre à réguler la puissance fournie au ou à chaque moteur de traction (56) par le ou chaque moyen de captation (50, 52) et/ou par le dispositif d'alimentation embarqué (58),
le véhicule de transport terrestre comprenant en outre une unité de communication (62, 64, 66, 68, 70) propre à communiquer avec un équipement au sol (1) associé au segment d'alimentation (7, 9 ; 100, 102, 104) au voisinage duquel circule le véhicule de transport terrestre (5) à l'instant courant ; **caractérisé en ce que** le contrôleur embarqué (60) est connecté à l'unité de communication (62, 64, 66, 68, 70) pour émettre et recevoir des signaux et est propre à :
a) recevoir, en réponse au signal de présence du véhicule de transport terrestre, un signal de fin de zone avec une alimentation externe (116) ;
c) commander, après réception du signal de fin de zone avec une alimentation externe, une transition d'une demande de puissance au dispositif d'alimentation externe (3) vers une demande de puissance au dispositif d'alimentation embarqué (58) pour alimenter le ou chaque moteur de traction (56).

7. Véhicule de transport terrestre selon la revendication 6, **caractérisé en ce que** le dispositif d'alimentation embarquée (58) comporte au moins un accumulateur chimique, au moins une pile à combustible, et/ou au moins un supercondensateur.

8. Véhicule de transport terrestre selon l'une quelconque des revendications 6 à 7, **caractérisé en ce que** l'unité de communication comprend une antenne embarquée (68, 70) agencée dans un ou chaque moyen de captation (50, 52).

9. Equipement au sol (1) pour un système de transport, l'équipement comprenant :
- une voie pour un véhicule de transport terrestre (5) ; et
- un dispositif d'alimentation externe (3) comportant une pluralité de segments d'alimentation (7, 9 ; 100, 102, 104) agencés séquentiellement le long de la voie, la pluralité de segments d'alimentation formant une zone d'alimentation externe (110), au moins un segment d'extrémité étant situé au voisinage d'une fin de la zone d'alimentation externe jouxtant une zone sans alimentation externe, à parcourir avec un dispositif d'alimentation embarqué (58), **caractérisé en ce que** l'équipement au sol comprend en outre
- une antenne (122, 124) de communication étant associée au ou à chaque segment d'alimentation externe (122, 124) ; et
- un contrôleur (23) propre à mettre sous tension le segment d'extrémité (7, 9 ; 102, 104) et propre à émettre, au moyen d'une antenne (122, 124) associée à ce segment d'extrémité, un signal de fin de zone avec une alimentation externe en réponse à un signal de présence d'un véhicule de transport terrestre (5) reçu par ladite antenne.

10. Système de transport comprenant au moins un véhicule de transport terrestre selon l'une quelconque des revendications 6 à 8 et un équipement au sol selon la revendication 9.

## Patentansprüche

1. Verfahren zum Steuern eines Boden-Transportfahrzeugs (5), das auf einer Fahrspur fährt, wobei die Fahrspur aufweist, entlang einer Richtung der Verlagerung des Boden-Transportfahrzeugs, eine Zone mit einer externen Versorgung (110), die benachbart ist zu einer Zone ohne externe Versorgung (114), die mit einer bordeigenen Versorgungsvorrichtung zu durchfahren ist, wobei die Zone mit einer externen Versorgung (110) aufweist eine externe Vorrichtung zur Versorgung über den Boden (3), die ausgestattet ist mit einer Mehrzahl von Versorgungssegmenten (7, 9; 100, 102, 104), die entlang der Richtung der Fahrspur sequentiell angeordnet sind, wobei das Boden-Transportfahrzeug aufweist wenigstens ein Einfangmittel (50, 52), das imstande ist, einerseits mit dem Versorgungssegment in Kontakt gebracht zu werden und andererseits elektrisch mit wenigstens einem Antriebsmotor (56) verbunden zu sein, wobei das Boden-Transportfahrzeug ferner aufweist eine bordeigene Versorgungsvorrichtung (58), die imstande ist, elektrisch mit dem oder jedem Antriebsmotor verbunden zu sein, wobei das Verfahren zumindest die Schritte aufweist, die bestehen aus:
a) Versorgen des oder jedes Antriebsmotors durch eine Leistung, die von einem Versorgungssegment (7, 9; 100, 102, 104) geliefert wird, mit welchem das Einfangmittel (50, 52) in Kontakt ist,
b) Aussenden, durch das Boden-Transportfahrzeug (5), eines Signals für die Anwesenheit des Boden-Transportfahrzeugs (5),
c) Aussenden, in Antwort auf das Signal für die Anwesenheit des Boden-Transportfahrzeugs, durch eine Antenne (17, 19; 120, 122, 124), die mit einem Versorgungssegment assoziiert ist, das in der Nähe des Endes der Zone mit einer externen Versorgung angeordnet ist, eines Signals für das Ende der Zone mit einer externen Versorgung,
d) Empfangen, durch das Boden-Transportfahrzeug (5), das benachbart zu dem Versorgungssegment positioniert ist, das mit der Antenne assoziiert ist, die das besagte Signal für das Ende der Zone mit einer externen Versorgung aussendet, des Signals für das Ende der Zone mit einer externen Versorgung,
e) Befehlen, nach dem Empfang des Signals für das Ende der Zone mit einer externen Versorgung, eines Übergangs von einer Leistungsanforderung an die externe Vorrichtung zur Versorgung (3) zu einer Leistungsanforderung an die bordeigene Versorgungsvorrichtung (58) zum Versorgen des oder jedes Antriebsmotors (56).

2. Verfahren gemäß Anspruch 1, aufweisend: das Signal für die Anwesenheit des Boden-Transportfahrzeugs wird zu der Antenne (17, 19; 120, 122, 124) gesendet, die mit dem Versorgungssegment assoziiert ist, und das Signal für das Ende der Zone mit einer externen Versorgung wird durch die gleiche Antenne gesendet in Antwort auf das Signal für die Anwesenheit des Boden-Transportfahrzeugs (5).

3. Verfahren gemäß Anspruch 2, **dadurch gekennzeichnet, dass**, in Antwort auf das Signal für die Anwesenheit des Boden-Transportfahrzeugs (5), das Versorgungssegment (7, 9; 100, 102, 104), mit welchem die Antenne (17, 19; 120, 122, 124) assoziiert ist, unter Spannung gesetzt wird.

4. Verfahren gemäß irgendeinem der vorhergehenden Ansprüche, **dadurch gekennzeichnet, dass** das Befehlen des Übergangs aufweist einen Vergleich einer tatsächlichen Geschwindigkeit mit einer vorbestimmten Geschwindigkeit, eine Verringerung der Leistungsanforderung an die externe Vorrichtung zur Versorgung (3), eine Erhöhung der Leistungsanforderung an die bordeigene Versorgungsvorrichtung (58), eine Anpassung der Leistungsanforderung an die externe Vorrichtung zur Versorgung an eine maximale Leistung, die von der bordeigenen Versorgungsvorrichtung (58) erzeugt wird, und/oder eine Kommutierung zu der bordeigenen Versorgungsvorrichtung (58) hin.

5. Verfahren gemäß irgendeinem der vorhergehenden Ansprüche, **dadurch gekennzeichnet, dass** das Signal für das Ende der Zone mit einer externen Versorgung aufweist eine Kennzeichnung, die es erlaubt, eine Lokalisierungsinformation bezüglich des Endes der Zone mit externer Versorgung und/oder eine Information, die es erlaubt, die Länge der Zone ohne externe Versorgung zu identifizieren, zu definieren.

6. Boden-Transportfahrzeug (5) aufweisend:
- wenigstens einen Antriebsmotor (56),
- wenigstens ein Einfangmittel (50, 52), das imstande ist, mit einem Versorgungssegment (7, 9; 100, 102, 104) einer externen Vorrichtung zur Versorgung (3) in Kontakt gebracht zu werden, und imstande ist, mit dem oder jedem Antriebsmotor (56) verbunden zu sein,
- eine bordeigene Steuervorrichtung (60),
- eine bordeigene Versorgungsvorrichtung (58), die imstande ist, mit dem oder jedem Antriebsmotor (56) verbunden zu sein, wobei die bordeigene Steuervorrichtung (60) imstande ist, die Leistung zu regulieren, die dem oder jedem Antriebsmotor (56) zugeführt wird durch das oder jedes Einfangmittel (50, 52) und/oder durch die bordeigene Versorgungsvorrichtung (58), wobei das Boden-Transportfahrzeug ferner aufweist eine Kommunikationseinheit (62, 64, 66, 68, 70), die imstande ist, mit einer Boden-Einrichtung (1) zu kommunizieren, die mit dem Versorgungssegment (7, 9; 100, 102, 104) assoziiert ist, benachbart zu welchem das Boden-Transportfahrzeug (5) im momentanen Augenblick fährt, **dadurch gekennzeichnet, dass** die bordeigene Steuervorrichtung (60) mit der Kommunikationseinheit (62, 64, 66, 68, 70) verbunden ist zum Aussenden und Empfangen von Signalen und imstande ist,
a) in Antwort auf das Signal für die Anwesenheit des Boden-Transportfahrzeugs ein Signal für das Ende der Zone mit einer externen Versorgung (116) zu empfangen,
c) nach dem Empfang des Signals für das Ende der Zone mit einer externen Versorgung, einen Übergang von einer Leistungsanforderung an die externe Vorrichtung zur Versorgung (3) zu einer Leistungsanforderung an die bordeigene Vorrichtung zur Versorgung (58) zum Versorgen des oder jedes Antriebsmotors (56) zu befehlen.

7. Boden-Transportfahrzeug gemäß Anspruch 6, **dadurch gekennzeichnet, dass** die bordeigene Vorrichtung zur Versorgung (58) aufweist wenigstens einen chemischen Akkumulator, wenigstens eine Brennstoffzelle und/oder wenigstens einen Superkondensator.

8. Boden-Transportfahrzeug gemäß irgendeinem der Ansprüche 6 bis 7, **dadurch gekennzeichnet, dass** die Kommunikationseinheit aufweist eine bordeigene Antenne (68, 70), die in einem oder jedem Einfangmittel (50, 52) angeordnet ist.

9. Boden-Einrichtung (1) für ein Transportsystem, wobei die Einrichtung aufweist:
- eine Fahrspur für ein Boden-Transportfahrzeug (5), und
- eine externe Vorrichtung zur Versorgung (3), die aufweist eine Mehrzahl von Versorgungssegmenten (7, 9; 100, 102, 104), die entlang der Fahrspur sequentiell angeordnet sind, wobei die Mehrzahl von Versorgungssegmenten eine Zone mit externer Versorgung (110) bilden, wobei wenigstens ein Endsegment benachbart zu einem Ende der Zone mit externer Versorgung angeordnet ist, angrenzend an eine Zone ohne externe Versorgung, welche mit einer bordeigenen Versorgungsvorrichtung (58) zu durchfahren ist, **dadurch gekennzeichnet, dass** die Boden-Einrichtung ferner aufweist
- eine Kommunikations-Antenne (122, 124), die mit dem oder jedem externen Versorgungssegment (122, 124) assoziiert ist, und
- eine Steuervorrichtung (23), die imstande ist, das Endsegment (7, 9; 102, 104) unter Spannung zu setzen, und imstande ist, mittels einer Antenne (122, 124), die mit diesem Endsegment assoziiert ist, ein Signal für das Ende der Zone mit einer externen Versorgung auszusenden in Antwort auf ein Signal für die Anwesenheit eines Boden-Transportfahrzeugs (5), das von der besagten Antenne empfangen wurde.

10. Transportsystem mit wenigstens einem Boden-Transportfahrzeug gemäß irgendeinem der Ansprüche 6 bis 8 und einer Boden-Einrichtung gemäß Anspruch 9.

## Claims

1. A method for controlling a land transport vehicle (5) traveling on a track, the track comprising, in a movement direction of the land transport vehicle, a zone with an external power supply (110) adjacent to a zone without an external power supply (114) to be traveled with an onboard power supply device, the zone with an external power supply (110) comprising an external power supply device on the ground (3) provided with a plurality of power supply segments (7, 9; 100, 102, 104) arranged sequentially in the direction of the track, the land transport vehicle including at least one capture device (50, 52) adapted to be placed in contact with a power supply segment on the one hand and to be electrically connected to at least one traction motor (56) on the other hand, the land transport vehicle further including an onboard power supply device (58) adapted to be electrically connected to the or each traction motor, the method comprising at least the following steps:
a) powering the or each traction motor with a power supplied by a power supply segment (7, 9; 100, 102, 104), with which the capture device (50, 52) is in contact;
b) emitting, by the a land transport vehicle (5), a presence signal of the land transport vehicle;
c) emitting, in response to the presence signal of the land transport vehicle, via an antenna (17, 19; 120, 122, 124) associated with the power supply segment situated close to the end of the zone with an external power supply, a signal indicating the end of the zone with an external power supply;
d) receiving, via the land transport vehicle (5) positioned in vicinity of the power supply segment associated with the antenna sending said signal indicating the end of a zone with an external power supply, the signal indicating the end of a zone with an external power supply;
e) commanding, after receiving the signal indicating the end of a zone with an external power supply, a transition from a power demand from the external power supply device (3) to a power demand from the onboard power supply device (58) to power the or each traction motor (56).

2. The method according to claim 1, comprising, the presence signal of the land transport vehicle being sent to the antenna (17, 19; 120, 122, 124) associated with the power supply segment, the signal indicating the end of a zone with an external power supply being sent by the same antenna in response to the presence signal of the land transport vehicle (5).

3. The method according to claim 2, **characterized in that**, in response to the presence signal of the land transport vehicle (5), the power supply segment (7, 9; 100, 102, 104) with which the antenna (17, 19; 120, 122, 124) is associated is powered on.

4. The method according to any one of the preceding claims, **characterized in that** the transition command comprises a comparison of the current speed with a predetermined speed; a decrease in the power requested from the external power supply device (3); an increase in the power requested from the onboard power supply device (58); an adjustment of the power requested from the external power supply device to a maximum power generated by the onboard power supply device (58); and/or a switch to the onboard power supply device (58).

5. The method according to any one of the preceding claims, **characterized in that** the signal indicating the end of the zone with an external power supply comprises an identifier enabling to define a localization information with respect to the end of the zone with an external power supply and/or an information enabling to identify the length of the zone without external power supply.

6. A land transport vehicle (5) comprising:
- at least one traction motor (56);
- at least one capture device (50, 52), adapted to be placed in contact with a power supply segment (7, 9; 100, 102, 104) of an external power supply device (3) and adapted to be connected to the or each traction motor (56);
- an onboard controller (60);
- an onboard power supply device (58) adapted to be connected to the or each traction motor (56), the onboard controller (60) being adapted to regulate the power supplied to the or each traction motor (56) by the or each capture device (50, 52) and/or by the onboard power supply device (58);
- the land transport vehicle further comprising a communication unit (62, 64, 66, 68, 70) adapted to communicate with ground equipment (1) associated with the power supply segment (7, 9; 100, 102, 104) in vicinity of which the land transport vehicle (5) is traveling at the current moment; **characterized in that** the onboard controller is connected to the communication unit (62, 64, 66, 68, 70) to send and receive signals and is adapted to:
a) receive, in response to a presence signal of the land transport vehicle, a signal indicating the end of a zone with an external power supply (116);
c) command, after receiving the signal indicating the end of a zone with an external power supply, a transition from a power demand from the external power supply device (3) toward a power demand from the onboard power supply device (58) to power the or each traction motor (56).

7. The land transport vehicle according to claim 6, **characterized in that** the onboard power supply device (58) includes at least one chemical battery, at least one fuel cell, and/or at least one supercapacitor.

8. The land transport vehicle according to any one of claims 6 to 7, **characterized in that** the communication unit comprises an onboard antenna (68, 70) arranged in one or each capture device (50, 52).

9. Ground equipment (1) for a transport system, the equipment comprising:
- a track for a land transport vehicle (5);
- an external power supply device (3) including a plurality of power supply segments (7, 9; 100, 102, 104) arranged sequentially along the track, the plurality of power supply segments forming an external power supply zone (110), at least one end segment being situated in vicinity to one end of the external power supply zone adjacent to a zone with no external power supply, to be traveled with an onboard power supply device (58), a communication antenna (122, 124) being associated with the or each external power supply segments (122, 124); and
- a controller (23) adapted to power on the end segment (7, 9; 102, 104) and adapted to send, using an antenna (122, 124) associated with that end segment, a signal indicating the end of a zone with an external power supply in response to a presence signal of the land transport vehicle (5) received by said antenna.

10. A transport system comprising at least one land transport vehicle according to any one of claims 6 to 8 and ground equipment according to claim 9.
